# EUROPEAN PATENT SPECIFICATION

(11) **EP 2 735 583 B1**
(45) Date of publication and mention of the grant of the patent: **14.09.2016**
(21) Application number: 12814634.7
(22) Date of filing: 18.07.2012
(51) Int. Cl.: C08J 5/00, C08K 5/372, C08K 5/524, C08L 67/02

(54) **RESIN MOLDED BODY AND AUTOMOBILE INTERIOR COMPONENT**
HARZFORMKÖRPER UND INNENAUSSTATTUNGSKOMPONENTE FÜR EIN KRAFTFAHRZEUG
CORPS MOULÉ EN RÉSINE, ET PIÈCE INTERNE DE VÉHICULE

(30) Priority: 20.07.2011 JP 2011158575
(43) Date of publication of application: 28.05.2014
(73) Proprietor: Wintech Polymer Ltd., Minato-ku Tokyo 108-8280 (JP)
(72) Inventor: DOI, Kumiko, Fuji-shi Shizuoka 416-8533 (JP); GOSHIMA, Kazuya, Fuji-shi Shizuoka 416-8533 (JP)
(74) Representative: Lux, Berthold
(86) International application number: PCT/JP2012/068192
(87) International publication number: WO 2013/012002

(56) References cited:
- EP-A2- 0 251 711
- JP-A- 2008 174 726
- JP-A- 2008 254 232
- JP-A- 2009 531 519
- JP-A- 2010 209 302
- JP-A- 2011 032 432
- US-A- 5 874 517
- US-A1- 2008 246 191

## Description

### TECHNICAL FIELD

The present invention relates to a resin molded article obtained by molding a polybutylene terephthalate resin composition, and an automobile interior component (component used for automobile interiors) constituted of the resin molded article.

### BACKGROUND ART

Thermoplastic polyester resins have widely been used in automobile components, films, electrical and electronic components, and the like because of its excellent mechanical properties, heat resistance, and moldability. Of these, a polybutylene terephthalate resin or a polyethylene terephthalate resin as a kind of polyester resins has high reinforcing effect due to an inorganic reinforcing material and is also excellent in chemical resistance. Therefore, these resins have widely been used as materials of industrial molded articles such as connectors, relays, and switches of automobiles as well as electrical and electronic equipment.

The polyethylene terephthalate resin mentioned above undergoes thermal decomposition during molding to produce acetaldehyde. Specifically, the polyethylene terephthalate resin subjected to high-temperature environment during molding undergoes thermal decomposition to thereby cause cleavage of an ester bond in a polymer chain, thus producing a component such as ethylene glycol, which is converted into acetaldehyde.

Acetaldehyde is a substance that can cause offensive or abnormal odors. Therefore, there is disclosed a technology which suppresses the generation of acetaldehyde during molding of a polyethylene terephthalate resin (see, for example, Patent Document 1).

Meanwhile, it has been considered that acetaldehyde is scarcely produced during molding of a polybutylene terephthalate resin. This is because, although a single bond between carbons must be cleaved so as to produce acetaldehyde from a polybutylene terephthalate resin, a single bond between carbons is not easily cleaved.

[Patent Document 1] Japanese Unexamined Patent Application (Translation of PCT Application), Publication No. 2003-534048

### DISCLOSURE OF THE INVENTION

### Problems to be Solved by the Invention

It has been considered that no acetaldehyde is produced during molding of a polybutylene terephthalate resin, as mentioned above. However, the present inventors have found that acetaldehyde is also produced from a polybutylene terephthalate resin during molding, although the amount of acetaldehyde produced from a polybutylene terephthalate resin is less than that produced from a polyethylene terephthalate resin.

An object of the present invention is to provide a technology which can suppress the amount of acetaldehyde produced during molding of a polybutylene terephthalate resin composition.

### Means for Solving the Problems

The present inventors have intensively studied so as to solve the problems mentioned above. As a result, they have found that the above problems can be solved when a resin molded article is produced by using, as the starting material, a polybutylene terephthalate resin composition including a polybutylene terephthalate resin, a hindered phenol-based antioxidant, and a phosphorus-based stabilizer, this completing the present invention. More specifically, the present invention provides the followings.
(1) A resin molded article constituted of a polybutylene terephthalate resin composition including a polybutylene terephthalate resin, a hindered phenol-based antioxidant, and a phosphorus-based stabilizer,wherein the phosphorous-based stabilizer is bis(2,6-di-t-butyl-4-methylphenyl)pentaerythritol diphosphite, and wherein the concentration of an acetaldehyde gas measured by the following method is 0.10 µg or less;
   method for measurement of acetaldehyde gas:
   the concentration of an aldehyde gas generated is measured when two specimens constituted of the polybutylene terephthalate resin composition, each measuring 100 mm × 40 mm × 2 mm, are treated under the conditions of 65°C for 2 hours.
(2) The resin molded article according to any one of (1), wherein the hindered phenol-based antioxidant is tetrakis[methylene-3-(3,5-di-t-butyl-4-hydroxyphenyl)propionate]methane.
(3) An automobile interior component constituted of the resin molded article according to any one of (1) or (2).

### Effects of the Invention

According to the present invention, it is possible to suppress the amount of acetaldehyde produced during molding of a polybutylene terephthalate resin composition. Therefore, a small amount of acetaldehyde leaks from the resin molded article of the present invention when the resin molded article is used.

### PREFERRED MODE FOR CARRYING OUT THE INVENTION

Embodiments of the present invention will be described in detail below.

### Resin Molded Article

The resin molded article of the present invention is constituted of a polybutylene terephthalate resin composition (hereinafter, may be simply referred to as a "resin composition") including a polybutylene terephthalate resin, a hindered phenol-based antioxidant, and a phosphorus-based stabilizer.

The polybutylene terephthalate resin included in the resin composition is a polybutylene terephthalate resin obtained by polycondensing a dicarboxylic acid component containing at least terephthalic acid or an ester-forming derivative thereof (C₁₋₆ alkyl ester or acid halide, etc.) with a glycol component containing at least an alkylene glycol having 4 carbon atoms (1,4-butanediol) or an ester-forming derivative thereof (acetylated product, etc.). The polybutylene terephthalate resin is not limited to a homopolybutylene terephthalate resin, and may be a copolymer including 60 mol% or more (particularly 75 mol% or more and 95 mol% or less) of a butylene terephthalate unit.

In the polybutylene terephthalate resin used in the present invention, the dicarboxylic acid component (comonomer component) other than terephthalic acid and an ester-forming derivative thereof includes, for example, C₈₋₁₄ aromatic dicarboxylic acids such as isophthalic acid, phthalic acid, 2,6-naphthalenedicarboxylic acid, and 4,4'-dicarboxydiphenylether; C₄₋₁₆ alkanedicarboxylic acids such as succinic acid, adipic acid, azelaic acid, and sebacic acid; C₅₋₁₀ cycloalkanedicarboxylic acids such as cyclohexanedicarboxylic acid; and ester-forming derivatives of these dicarboxylic acid components (C₁₋₆ alkyl ester derivatives, acid halides, etc.). These dicarboxylic acid components can be used alone, or two or more kinds of them can be used in combination.

Of these dicarboxylic acid components, C₈₋₁₂ aromatic dicarboxylic acids such as isophthalic acid; and C₆₋₁₂ alkanedicarboxylic acids such as adipic acid, azelaic acid, and sebacic acid are more preferable.

In the polybutylene terephthalate resin used in the present invention, the glycol component (comonomer component) other than 1,4-butanediol includes, for example, C₂₋₁₀ alkylene glycols such as ethylene glycol, propylene glycol, trimethylene glycol, 1,3-butylene glycol, hexamethylene glycol, neopentyl glycol, and 1,3-octanediol; polyoxyalkylene glycols such as diethylene glycol, triethylene glycol, and dipropylene glycol; alicyclic diols such as cyclohexanedimethanol and hydrogenated bisphenol A; aromatic diols such as bisphenol A and 4,4'-dihydroxybiphenyl; C₂₋₄ alkylene oxide adducts of bisphenol A, such as 2 mol ethylene oxide adduct of bisphenol A and 3 mol propylene oxide adduct of bisphenol A; or ester-forming derivatives of these glycols (acetylated products, etc.). These glycol components can be used alone, or two or more kinds of them can be used in combination.

Of these glycol components, C₂₋₆ alkylene glycols such as ethylene glycol and trimethylene glycol; polyoxyalkylene glycols such as diethylene glycol; or alicyclic diols such as cyclohexanedimethanol are more preferable from the viewpoint of physical properties of the resin.

When using ethylene glycol, acetaldehyde is produced without causing cleavage of a single bond between carbons, in the same manner as in the case of a polyethylene terephthalate resin. Even when an ethylene glycol component is not contained in a polybutylene terephthalate resin, or even when a trace amount of an ethylene glycol component is contained in a polybutylene terephthalate resin, acetaldehyde may be produced during molding of the polybutylene terephthalate resin, and it is one of the features of the present invention that it is possible to suppress production of acetaldehyde. "Even when an ethylene glycol component is not contained, or even when a trace amount of an ethylene glycol component is contained" refers to the case that 0 mol% or more and 1 mol% or less of a repeating unit derived from ethylene glycol is included in a polybutylene terephthalate resin.

An inherent viscosity of the polybutylene terephthalate resin used in the present invention is not particularly limited as long as it does not impair the objects of the present invention. The inherent viscosity (IV) of the polybutylene terephthalate resin is preferably 0.65 dL/g or more and 1.4 dL/g or less. When using a polybutylene terephthalate resin having an inherent viscosity in the above range, the obtained polybutylene terephthalate resin composition is particularly excellent in moldability. It is also possible to adjust the inherent viscosity by blending polybutylene terephthalate resins having different inherent viscosities. For example, it is possible to prepare a polybutylene terephthalate resin having an inherent viscosity of 0.9 dL/g by blending a polybutylene terephthalate resin having an inherent viscosity of 1.0 dL/g with a polybutylene terephthalate resin having an inherent viscosity of 0.7 dL/g. An inherent viscosity (IV) of the polybutylene terephthalate resin can be measured in o-chlorophenol under the condition of a temperature of 35°C.

The amount of terminal carboxyl groups of the polybutylene terephthalate resin used in the present invention is not particularly limited as long as it does not impair the objects of the present invention. The amount of terminal carboxyl groups of the polybutylene terephthalate resin used in the present invention is preferably 30 meq/kg or less, and more preferably 25 meq/kg or less. When using a polybutylene terephthalate resin in which the amount of terminal carboxyl groups is in such range, the obtained polybutylene terephthalate resin composition is less likely to undergo a decrease in strength due to hydrolysis under moist heat environment.

The content of the polybutylene terephthalate resin in the resin molded article is preferably 30% by mass or more and 99.98% by mass or less. The content is preferably 30% by mass or more since the resin molded article exhibits physical properties improved due to inclusion of the polybutylene terephthalate resin. More preferably, the content of the polybutylene terephthalate resin is 50% by mass or more and 99.98% by mass or less.

The hindered phenol-based antioxidant contained in the resin composition may be a monocyclic hindered phenol compound, a polycyclic hindered phenol compound combined through a hydrocarbon group or a group having sulfur atoms, a hindered phenol compound having an ester group or amide group, or the like. The hindered phenol-based antioxidant includes, for example, 2,6-di-t-butyl-p-cresol, C₂₋₁₀ alkylenebis(t-butylphenol) [e.g. 2,2'-methylenebis(4-methyl-6-t-butylphenol), 4,4'-methylenebis(2,6-di-t-butylphenol), etc.], tris(di-t-butyl-hydroxybenzyl)benzene [e.g. 1,3,5-trimethyl-2,4,6-tris(3,5-di-t-butyl-4-hydroxybenzyl)benzene, etc.], C₂₋₁₀ alkanediol-bis[(di-t-butyl-hydroxyphenyl)propionate] [e.g. 1,6-hexanediol-bis[3-(3,5-di-t-butyl-4-hydroxyphenyl)propionate], etc.], di or trioxy C₂₋₄ alkanediol-bis(t-butyl-hydroxyphenyl)propionate [e.g. triethylene glycol-bis[3-(3-t-butyl-5-methyl-4-hydroxyphenyl)propionate], etc.], C₃₋₈ alkanetriol-bis[(di-t-butyl-hydroxyphenyl)propionate], C₄₋₈ alkanetetraoltetrakis[(di-t-butyl-hydroxyphenyl)propionate] [e.g. pentaerythritoltetrakis[3-(3,5-di-t-butyl-4-hydroxyphenyl)propionate], etc.], long chain alkyl(di-t-butylphenyl)propionate [e.g. n-octadecyl-3-(4',5'-di-t-butylphenyl)propionate, stearyl-2-(3,5-di-t-butyl-4-hydroxyphenyl)propionate, etc.], 2-t-butyl-6-(3-t-butyl-5-methyl-2-hydroxybenzyl)-4-methylphenylacrylate, and 4,4'-thiobis(3-methyl-6-t-butylphenol). These phenol-based antioxidants can be used alone, or two or more kinds of them can be used in combination. Tetrakis[methylene-3-(3,5-di-t-butyl-4-hydroxyphenyl)propionate]methane can be used as the phenol-based antioxidant.

The content of the hindered phenol-based antioxidant in the resin composition is preferably 0.01% by mass or more and 3% by mass or less. The content of less than 0.01% by mass may exert insufficient effect of suppressing production of acetaldehyde, which leads to insufficient long-term thermal stability effect. On the other hand, the content of more than 3% by mass may lead to deterioration of mechanical properties. More preferably, the content of the hindered phenol-based antioxidant is 0.1% by mass or more and 1% by mass or less.

The phosphorus-based stabilizer contained in the resin composition is bis(2,6-di-t-butyl-4-methylphenyl)pentaerythritol diphosphite

The content of the phosphorus-based stabilizer in the resin composition is preferably 0.01% by mass or more and 3% by mass or less. The content of less than 0.01% by mass may exert insufficient effect of suppressing production of acetaldehyde, which leads to insufficient long-term thermal stability effect. On the other hand, the content of more than 3% by mass may lead to deterioration of mechanical properties. The content of the phosphorus-based stabilizer is more preferably in a range of 0.1% by mass or more and 1% by mass or less.

Use of the above-mentioned hindered phenol-based antioxidant and phosphorus-based stabilizer in combination enables suppression of the amount of acetaldehyde produced during molding of the polybutylene terephthalate resin composition. Preferably, tetrakis[methylene-3-(3,5-di-t-butyl-4-hydroxyphenyl)propionate]methane is used as the hindered phenol-based antioxidant and a phosphorus compound having trivalent phosphorus atoms is used as the phosphorus-based stabilizer, so as to enhance the effects of the present invention.

The resin composition may contains, in addition to the above-mentioned essential components, other resins, reinforcing agents such as glass fibers, and additives such as pigments as long as they do not impair the effects of the present invention. The content of other components in the resin composition is preferably 60% by mass or less. More preferably, the content is 30% by mass or less.

It is possible to use, as both the above-mentioned essential components and other components, either components produced by a conventionally known production method, or commercially available products.

### Method for Production of Resin Molded Article

The resin molded article of the present invention is obtained by molding the above-mentioned resin composition by a common molding method. The molding method includes, for example, an injection molding method and an extrusion molding method. The method for producing a resin molded article of the present invention will be described below by way of the case of using an extrusion molding machine as example.

In a common extrusion molding machine, a cylinder including a hopper, into which a starting material is charged, is provided with a screw. The screw includes a feed zone (feed section), a compression zone (compression section), and a metering zone (metering section) from a hopper side, towards the downstream side from the upstream side of the screw, in this order. A die is provided at the end of the downstream side of the cylinder.

The feed section usually has a function of transferring a starting material from the hopper side towards the die side at a temperature setting where the starting material is not melted. Specifically, the starting material is sent to the compression section from the feed section. In the compression section, the starting material is melt-kneaded while applying a pressure or heat to the starting material, and then melt-kneaded starting material is sent to the metering section. In the metering section, the melt-kneaded starting material is delivered to a die under a given pressure by a given amount. It is possible to use a screw including a mixing zone (kneading section) at the downstream side of the metering section.

More specifically, first, the starting material is charged in the extrusion molding machine. The starting material is constituted of the above-mentioned components, and all the components may be simultaneously charged in the molding machine, or partial components may be charged in the compression section or other sections.

In the present invention, polybutylene terephthalate resin pellets and a powdered polybutylene terephthalate resin may be charged from the hopper, together with a hindered phenol-based antioxidant and a phosphorus-based stabilizer. Addition of the powdered polybutylene terephthalate resin enables sufficient kneading of the polybutylene terephthalate resin with the hindered phenol-based antioxidant and the phosphorus-based stabilizer in the compression section or the like.

As mentioned above, in the compression section, the starting material is kneaded while applying a pressure or heat. The degree of kneading depends on molding conditions such as the kind of a screw element to be used, and the screw rotation number. In the production of the resin molded article of the present invention, the degree of kneading can be appropriately adjusted according to the kind of a resin, the shape of a resin molded article, and the like.

In the compression section, a pressure or heat is added to the starting material to thereby produce acetaldehyde. The amount of acetaldehyde thus produced is significantly less than that in the case of using a polyethylene terephthalate resin. This reason is considered that it is necessary to cleave a single bond between carbons so as to produce acetaldehyde from a polybutylene terephthalate resin. Therefore, it has not hitherto been considered that acetaldehyde is produced during molding of a polybutylene terephthalate resin.

Namely, it is considered that the present invention enables suppression of production of acetaldehyde due to cleavage of a bond between carbons.

As mentioned above, in the metering section, the starting material kneaded in the compression section is delivered to a die under a given pressure by a given amount. The above-mentioned "given pressure" and "given amount" can be appropriately changed according to the shape of the resin molded article, and the like. These can be adjusted by adjusting the groove width and the groove depth of the screw element.

The starting material is extruded through the die to obtain the resin molded article of the present invention. The shape of the resin molded article varies depending on the shape of the discharge port of the die and includes, for example, sheet, strand, and tube. A strand-shaped resin molded article is cut by a conventionally known method (e.g. pelletizing method), and thus resin pellets can be produced.

When a resin molded article having a complicated shape is produced, an injection molding method is preferably employed.

### Resin Molded Article

The resin molded article of the present invention has extremely low content of acetaldehyde. The concentration of acetaldehyde measured by the following method is 0.10 µg or less.

### (Method For Measurement of Acetaldehyde Gas)

The concentration of an aldehyde gas generated is measured when two specimens constituted of the polybutylene terephthalate resin composition, each measuring 100 mm × 40 mm × 2 mm, are treated under the condition of 65°C for 2 hours. More specifically, the method is as mentioned in Examples.

The resin molded article of the present invention can be suitably used as a component used in a space to be closed, or a closable space. This is because there is some possibility of causing a problem in a closed space even if a trace amount of acetaldehyde is produced from a resin molded article. Specific examples of such component include an automobile interior component.

### EXAMPLES

The present invention will be described by way of Examples and Comparative Examples below.

### Materials

In Examples and Comparative Examples, the following components were used as a material of a polybutylene terephthalate resin composition.

### (Polybutylene Terephthalate Resin)

Polycondensate of terephthalic acid and 1,4-butanediol, having an inherent viscosity (IV) of 0.69, "DURANEX 300FP" manufactured by WinTech Polymer Ltd.

### (Hindered Phenol-Based Antioxidant)

Tetrakis[methylene-3-(3,5-di-t-butyl-4-hydroxyphenyl)propionate]methane

### (Other Antioxidants)

Antioxidant 1: Bis(2,2,6,6-tetramethyl-4-piperidyl)sebacate
Antioxidant 2: Tetrakis[methylene-3-(dodecylthio)propionate]methane

### (Phosphorus-Based Stabilizers)

Phosphorus-based stabilizer 1: Bis(2,6-di-t-butyl-4-methylphenyl)pentaerythritol diphosphite
Phosphorus-based stabilizer 2: Tetrakis(2,4-di-t-butylphenyl)-4,4'-biphenylene phosphonite
Phosphorus-based stabilizer 3: Monobasic sodium phosphate
Phosphorus-based stabilizer 4: Monobasic calcium phosphate
Phosphorus-based stabilizer 5: Trimethyl phosphate
Method for Production of Resin Composition Pellets to produce Resin Molded Article

A starting material which is a mixture obtained by mixing the components shown in Table 1 according to the proportion shown in Table 1 (unit is % by mass) was charged in a twin screw extruder (TEX-30, manufactured by JSW). Under the following conditions, the above starting material was melt-kneaded to produce a polybutylene terephthalate resin composition. The melt-kneaded polybutylene terephthalate resin composition was discharged in the form of a strand through a die at the tip of the twin screw extruder, equipped with a circular discharge port having a hole diameter 4 mm. The strand of the polybutylene terephthalate resin composition was cooled and then cut into a length of 3 mm to obtain pellets of the polybutylene terephthalate resin composition.

### (Melt-Kneading Conditions)

Cylinder temperature: 260°C
Screw rotation number: 130 rpm
Extrusion amount: 12 kg/hr

### Production of Specimens

The pellets of the polybutylene terephthalate resin composition were kept in an incubator at 140°C for 3 hours to thereby dry the pellets. The dried pellets were molded into specimens measuring 100 mm × 40 mm × 2 mm by an injection molding machine (J75EP, manufactured by JSW).

### (Injection Molding Conditions)

Cylinder temperature: 250°C
Mold temperature: 60°C
Injection speed: 16.7 mm/second

### Measurement of Concentration of Acetaldehyde Gas

The amount of an acetaldehyde gas generated from each of the resin molded articles of Examples and Comparative Examples was evaluated by the concentration of the acetaldehyde gas measured by the following method.

The concentration of the acetaldehyde gas was measured by the following method (i) to (ii).
(i) Two specimens molded by injection molding were enclosed in a Tedlar bag having a volume of 10 L and air in the bag was removed by a vacuum pump, and then the Tedlar bag was supplied with 4 L of pure nitrogen gas and a cock of the Tedlar bag was closed. The Tedlar bag was placed in an oven and a sampling Teflon (registered trademark) tube was attached to the tip of the cock. After extending the tube to the outside of the oven, a heating treatment was performed in this state at 65°C for 2 hours. A sample gas was prepared by such heating treatment.
(ii) The sample gas prepared in (i) above was collected in a 2,4-dinitrophenylhydrazine (abbreviation: DNPH) cartridge in the amount of 3 L in a heating state at 65°C. After collection, the cartridge was eluted with acetonitrile and the obtained eluate was subjected to measurements of the concentration of acetaldehyde of an eluted component using a high-performance liquid chromatograph (HPLC; manufactured by Waters, Model: Ultra Performance Liquid Chromatography Aquiy). For calculation of the concentration, the amount of an acetaldehyde gas generated from two test molded specimens was calculated from a peak area from the sample by using aldehyde/ketone-DNPH mixed standard sample ERA-028 as a standard solution. The calculation results are shown in Table 1.

### Measurement of Melt Viscosity after Residence

As an indicator of thermal stability, a change in melt viscosity due to a difference in residence time was evaluated. Pellets of the polybutylene terephthalate resin composition used in each of the resin molded articles of Examples and Comparative Examples were dried at 140°C for 3 hours, and then a melt viscosity was measured at a furnace temperature of 260°C, capillary of ϕ1 mm ×20 mmL, and a shear rate of 1,000 sec⁻¹ in conformity with ISO11443, using Capillograph 1B (manufactured by Toyo Seiki Seisaku-Sho, Ltd.). Measurements were performed, respectively, when the residence time in a furnace was set at 9 minutes and 16 minutes. A retention rate of the melt viscosity obtained when the residence time was set at 16 minutes to that obtained when the residence time was set at 9 minutes is shown in Table 1.

**[Table 1]**

| | Example | | | Comparative Example | | | | | | | |
|---|---|---|---|---|---|---|---|---|---|---|---|
| | 1 | 2 | 3 | 1 | 2 | 3 | 4 | 5 | 6 | 7 | 8 |
| PBT | 99.6 | 99.4 | 99.5 | 100 | 99.7 | 99.7 | 99.4 | 99.7 | 99.6 | 99.6 | 99.6 |
| Hindered phenol-based antioxidant | 0.3 | 0.3 | 0.3 | | | 0.3 | 0.3 | | 0.3 | 0.3 | 0.3 |
| Antioxidant 1 | | | | | 0.3 | | | | | | |
| Antioxidant 2 | | | | | | | 0.3 | | | | |
| Phosphorus-based stabilizer 1 | 0.1 | 0.3 | | | | | | 0.3 | | | |
| Phosphorus-based stabilizer 2 | | | 0.2 | | | | | | | | |
| Phosphorus-based stabilizer 3 | | | | | | | | | 0.1 | | |
| Phosphorus-based stabilizer 4 | | | | | | | | | | 0.1 | |
| Phosphorus-based stabilizer 5 | | | | | | | | | | | 0.1 |
| Concentration of acetaldehyde gas (µg) | 0.09 | 0.09 | 0.10 | 0.22 | 0.18 | 0.15 | 0.17 | 0.16 | 0.21 | 0.27 | 0.35 |
| Melt viscosity retention rate during residence (%) | 91 | 91 | 90 | 91 | 91 | 90 | 91 | 91 | 91 | 91 | 91 |

Example 3 is a comparative example.

It is possible to confirm from the results of Comparative Example 1 that the acetaldehyde gas is generated from the polybutylene terephthalate resin during molding.

It was confirmed from a comparison between the results of Examples 1 to 3 and those of Comparative Example 1 that the generation of the acetaldehyde gas can be suppressed.

It was confirmed from a comparison between the results of Examples 1 to 3 and those of Comparative Examples 1 to 4 that use of the hindered phenol-based antioxidant in combination with the phosphorus-based stabilizer enables a decrease in the amount of the acetaldehyde gas to be generated.

In the case of the composition obtained by adding 3% by mass of the hindered phenol-based antioxidant and 0.1% by mass of the phosphorus-based stabilizer 1 to 96.9% by mass of the polybutylene terephthalate resin, significant discoloration is observed in the obtained resin molded article. In the case of the composition obtained by adding 0.3% by mass of the hindered phenol-based antioxidant and 3% by mass of the phosphorus-based stabilizer 1 to 96.7% by mass of the polybutylene terephthalate resin, the obtained resin molded article is significantly brittle. Both compositions were unworthy of evaluation.

It was confirmed from the results of Examples and Comparative Examples that, a difference in the kind or combination of the antioxidant and the phosphorus-based stabilizer makes no difference in thermal stability (change in melt viscosity during residence) but makes a large difference in the generation of the acetaldehyde gas. Namely, the antioxidant and the phosphorus-based stabilizer are usually added for the purpose of improving thermal stability. However, from such point of view, it was confirmed that a specific effect due to selection of the present combination is unpredictable.

## Claims

1. A resin molded article constituted of a polybutylene terephthalate resin composition comprising a polybutylene terephthalate resin, a hindered phenol-based antioxidant, and a phosphorus-based stabilizer,
wherein the phosphorus-based stabilizer is bis(2,6-di-t-butyl-4-methylphenyl)pentaerythritol diphosphite, and
the concentration of an acetaldehyde gas, generated when two specimens constituted of the polybutylene resin composition, each measuring 100mm x 40 mm x 2 mm, are heated to 65°C for two hours, is 0.10 µg or less.

2. The resin molded article according to claim 1, wherein the hindered phenol-based antioxidant is tetrakis[methylene-3-(3,5-di-t-butyl-4-hydroxyphenyl)propionate]methane.

3. An automobile interior component constituted of the resin molded article according to any one of claims 1 to 2.

## Patentansprüche

1. Harz-Form-Gegenstand, aufgebaut aus einer Polybutylenterephthalat-Harz-Zusammensetzung, umfassend ein Polybutylenterephthalat-Harz, ein Antioxidans auf der Basis von gehindertem Phenol und einen Stabilisator auf der Basis von Phosphor, wobei der Stabilisator auf der Basis von Phosphor Bis-(2, 6-di-t-butyl-4-methylphenyl)-pentaerythritdiphosphit ist, und die Konzentration von einem Acetaldehyd-Gas, das erzeugt wird, wenn zwei aus der Polybutylen-Harz-Zusammensetzung aufgebaute Probestücke mit Abmessungen von jeweils 100 mm x 40 mm x 2 mm für zwei Stunden auf 65°C erhitzt werden, 0,10 µg oder weniger ist.

2. Harz-Form-Gegenstand nach Anspruch 1, wobei das Antioxidans auf der Basis von gehindertem Phenol Tetrakis-[methylen-3- (3, 5-di-t-butyl-4-hydroxyphenyl)-propionat]-methan ist.

3. Kraftfahrzeug-Innen-Komponente, die aus dem Harz-Form-Gegenstand nach einem der Ansprüche 1 bis 2 aufgebaut ist.

## Revendications

1. Article moulé en résine constitué d'une composition de résine de poly(téréphtalate de butylène) comprenant une résine de poly(téréphtalate de butylène), un antioxydant à base de phénol encombré, et un stabilisant à base de phosphore, dans lequel le stabilisant à base de phosphore est le diphosphite de bis(2,6-di-t-butyl-4-méthylphényl)pentaérythritol, et la concentration d'acétaldéhyde gazeux généré quand deux échantillons constitués de la composition de résine de polybutylène, mesurant chacun de 100 mm x 40 mm x 2 mm, sont chauffés à 65°C pendant deux heures, est de 0,10 µg ou moins.

2. Article moulé en résine selon la revendication 1, dans lequel l'antioxydant à base de phénol encombré est le tétrakis[méthylène-3-(3,5-di-t-butyl-4-hydroxyphényl)-propionato]méthane.

3. Composant d'intérieur d'automobile constitué de l'article moulé en résine selon l'une quelconque des revendications 1 et 2.
